# EUROPEAN PATENT APPLICATION

(11) **EP 4 335 689 A1**
(43) Date of publication of application: **13.03.2024**
(21) Application number: 23179530.3
(22) Date of filing: 15.06.2023
(51) Int. Cl.: B60L 53/63, B60L 53/64, B60L 53/67, B60L 53/68, B60L 55/00

(54) **SERVER AND MANAGEMENT METHOD**

(30) Priority: 10.08.2022 JP 2022127684
(71) Applicant: TOYOTA JIDOSHA KABUSHIKI KAISHA, Aichi-ken 471-8571 (JP)
(72) Inventor: TAKAHASHI, Tomoya, Toyota-shi 471-8571 (JP); EHARA, Masato, Toyota-shi 471-8571 (JP)
(74) Representative: D Young & Co LLP

(57) **Abstract**

A server (100; 300) configured to manage power control including at least one of power supply from an electrified vehicle (10) to an electric power system (PG) and charge from the electric power system (PG) to the electrified vehicle (10) includes an acquisition unit (103; 303) configured to acquire information on a first time period in which the power control is performed by the electrified vehicle (10) that has acceded to a request to perform the power control, and a processor (101; 301) configured to determine, in a second time period before the first time period, whether there is an abnormality on at least one of a communication status of the electrified vehicle (10) and whether the power control is allowed to be performed by the electrified vehicle (10). The processor (101; 301) is configured to, when the processor (101; 301) determines that there is no abnormality, execute command control such that the power control is performed by the electrified vehicle (10) in the first time period.

## Description

### BACKGROUND OF THE INVENTION

### 1. Field of the Invention

The disclosure relates to a server and a management method.

### 2. Description of Related Art

Japanese Unexamined Patent Application Publication No. 2020-156149 (JP 2020-156149 A) describes an electrical power system including an aggregator and a consumer. The aggregator provides the consumer with a virtual power plant (VPP) service. A contract for using the VPP service is concluded between the aggregator and the consumer.

### SUMMARY OF THE INVENTION

Although not clearly described in JP 2020-156149 A, the contract concluded between the aggregator and the consumer can include information on an agreed (committed) time period in which electric power is charged and discharged. Here, the consumer can be not able to perform charge and discharge of electric power in the time period. In this case, although the aggregator is scheduled to perform power control, the consumer is not able to perform power control, so a request to adjust demand and supply of electric power is not satisfied. Therefore, a system (server) capable of further reliably satisfying a request to adjust demand and supply of electric power is desired.

The disclosure provides a server and a management method capable of further reliably satisfying a request to adjust demand and supply of electric power.

A first aspect of the disclosure relates to a server. The server is configured to manage power control including at least one of power supply from at least one electrified vehicle to an electric power system and charge from the electric power system to the electrified vehicle. The server includes an acquisition unit configured to acquire information on a first time period in which the power control is performed by the electrified vehicle that has acceded to a request to perform the power control, and a processor configured to determine, in a second time period before the first time period, whether there is an abnormality on at least one of a communication status of the electrified vehicle and whether the power control is allowed to be performed by the electrified vehicle. The processor is configured to, when the processor determines that there is no abnormality, execute command control such that the power control is performed by the electrified vehicle in the first time period.

With the server according to the first aspect of the disclosure, when it is determined that there is no abnormality in a second time period before the first time period, command control is executed such that the power control is performed by the electrified vehicle in the first time period. Thus, since it is determined whether there is the abnormality in advance of power control, demand and supply of electric power is adjusted further reliably through power control by using the electrified vehicle for which it is determined that there is no abnormality. As a result, a request to adjust demand and supply of electric power is further reliably satisfied.

In the server according to the first aspect, the processor may be configured to determine whether there is the abnormality on both the communication status of the electrified vehicle and whether the power control is allowed to be performed by the electrified vehicle. With this configuration, in comparison with the case where only one of the communication status of the electrified vehicle and whether the power control is allowed to be performed by the electrified vehicle is determined, demand and supply of electric power is further reliably adjusted through the power control by using the electrified vehicle for which it is determined that there is no abnormality.

In the server according to the first aspect, a plurality of the electrified vehicles may be provided. The processor may be configured to, when the acquisition unit acquires information on a fact that each of the plurality of electrified vehicles performs the power control in the first time period common to the plurality of electrified vehicles, execute control to divide the plurality of electrified vehicles into a plurality of groups, and determine whether there is the abnormality in each of the plurality of groups in a corresponding one of the second time periods different from each other. With this configuration, it is possible to reduce a situation in which the determination is performed at the same time among the plurality of electrified vehicles. As a result, a communication load on the server is reduced.

In the server according to the first aspect, the electrified vehicle may be configured to perform the power control through a power station. The command control may include control to send a command value of at least one of an amount of charge and an amount of power supply in the power control to the power station. With this configuration, it is possible to cause the electrified vehicle to perform the power control based on the command value through the power station. Therefore, a request to adjust demand and supply of electric power is easily satisfied.

In the server according to the first aspect, the command control may include control to send schedule information including information on the first time period of the power control to the electrified vehicle. With this configuration, a user of the electrified vehicle is able to perform the power control in the first time period based on the schedule information. As a result, users who forget to perform the power control are reduced.

A second aspect of the disclosure relates to a management method of managing power control including at least one of power supply from an electrified vehicle to an electric power system and charge from the electric power system to the electrified vehicle. The management method includes acquiring information on a first time period in which the power control is performed by the electrified vehicle that has acceded to a request to perform the power control, determining, in a second time period before the first time period, whether there is an abnormality on at least one of a communication status of the electrified vehicle and whether the power control is allowed to be performed by the electrified vehicle, and, when it is determined that there is no abnormality, executing command control such that the power control is performed by the electrified vehicle in the first time period.

With the management method according to the second aspect of the disclosure, when it is determined that there is no abnormality in the second time period before the first time period, command control is executed such that the power control is performed by the electrified vehicle in the first time period. Thus, the management method capable of further reliably satisfying a request to adjust demand and supply of electric power is provided.

According to the aspects of the disclosure, a request to adjust demand and supply of electric power is further reliably satisfied.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the configuration of a system according to a first embodiment;
FIG. 2 is a timing chart that shows a committed time period and a time period before the committed time period;
FIG. 3 is a diagram that shows an example in which a plurality of electrified vehicles is classified into a plurality of groups;
FIG. 4 is a flowchart that shows a management method for power control according to the first embodiment;
FIG. 5 is a diagram that shows the configuration of a system according to a second embodiment;
FIG. 6 is a view that shows a screen including schedule information of external charging according to the second embodiment; and
FIG. 7 is a flowchart that shows a management method for power control according to the second embodiment.

### DETAILED DESCRIPTION OF EMBODIMENTS

Hereinafter, embodiments of the disclosure will be described in detail with reference to the accompanying drawings. Like reference signs denote the same or corresponding portions in the drawings, and the description thereof will not be repeated.

### First Embodiment

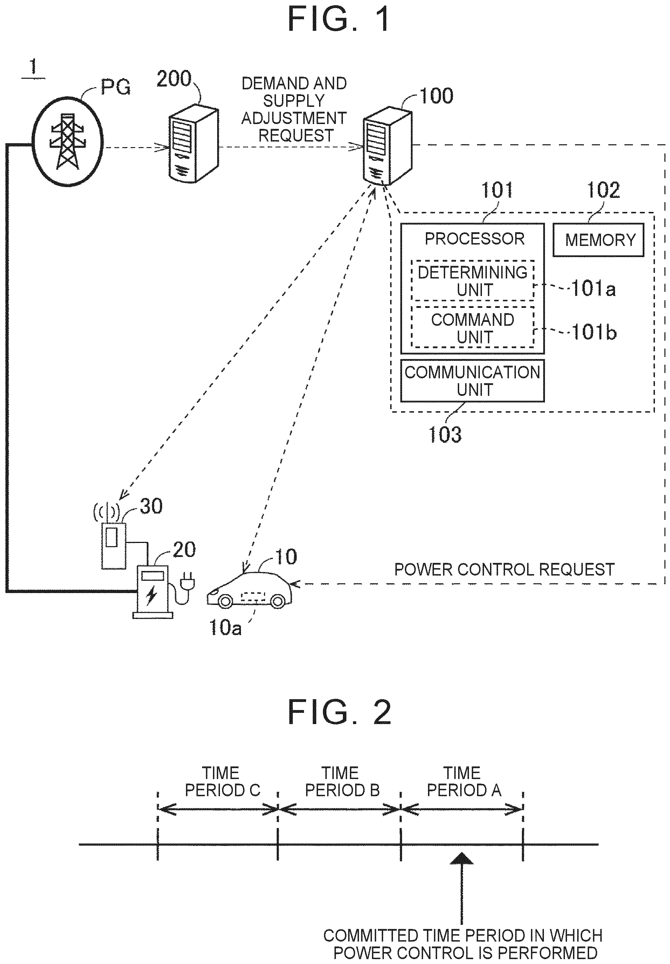

FIG. 1 is a diagram that shows the configuration of a system 1 according to a first embodiment. The system 1 includes an electric power system PG, a server 100, a system management server 200, an electrified vehicle 10, an electric vehicle supply equipment (EVSE) 20, and a gateway 30. The server 100 is a server that manages the EVSE 20. The server 100 manages power control (described later) of the electrified vehicle 10.

Examples of the electrified vehicle 10 include a plug-in hybrid electric vehicle (PHEV), a battery electric vehicle (BEV), and a fuel cell electric vehicle (FCEV).

The EVSE 20 is capable of performing power supply to the electric power system PG (external power supply) and charge from the electric power system PG (external charging). In other words, the electrified vehicle 10 is capable of performing external power supply and external charging through the EVSE 20. Hereinafter, the external power supply and external charging are collectively referred to as power control. The EVSE 20 is an example of a power station according to the disclosure.

The electric power system PG is a power grid constructed of a power plant (not shown) and a power collection system (not shown). In the first embodiment, a power company serves as both a power generation operator and a power transmission and distribution operator. The power company corresponds to a general power transmission and distribution operator and maintains and manages the electric power system PG. The power company corresponds to a manager of the electric power system PG.

The system management server 200 manages demand and supply of the electric power system PG (power grid). The system management server 200 belongs to the power company. The system management server 200 sends a request to adjust power demand of the electric power system PG (demand and supply adjustment request) to the server 100 based on generation and consumption of electric power by power adjustment resources that the system management server 200 manages. Specifically, the system management server 200 sends a request to increase or decrease power demand as compared to during normal times to the server 100 when generated electric power or consumed electric power of the power adjustment resources is expected to be greater (or greater at current point in time) than normal.

The server 100 is a server that an aggregator manages. The aggregator is an electric power supplier that binds a plurality of power adjustment resources in a region, a predetermined facility, or the like and provides an energy management service.

The server 100 makes a request of the electrified vehicle 10 to perform power control as one of manners to increase or decrease the power demand of the electric power system PG. The server 100 sends a request signal to make the request of the electrified vehicle 10, to the electrified vehicle 10 or a mobile terminal or the like (not shown) owned by a user of the electrified vehicle 10.

The server 100 is configured to manage information on electrified vehicles 10 registered (hereinafter, also referred to as vehicle information), information on users registered (hereinafter, also referred to as user information), and information on EVSEs 20 registered (hereinafter, also referred to as EVSE information). The user information, the vehicle information, and the EVSE information are identified with identification information (ID) and stored in a memory 102 of the server 100.

A user ID is identification information for identifying a user and also functions as information (terminal ID) that identifies a mobile terminal (not shown) carried by the user. The server 100 is configured to save information received from a mobile terminal user ID by user ID. The user information includes a communication address of a mobile terminal carried by a user, and a vehicle ID of an electrified vehicle 10 that belongs to the user.

A vehicle ID is identification information for identifying an electrified vehicle 10. The vehicle ID may be a license plate or may be a vehicle identification number (VIN). The vehicle information includes an activity schedule of an electrified vehicle 10.

An EVSE-ID is identification information for identifying an EVSE 20. The EVSE information includes a communication address of an EVSE 20 and a state of an electrified vehicle 10 connected to the EVSE 20. The EVSE information also includes information indicating a combination of an electrified vehicle 10 and an EVSE 20 connected to each other (for example, a combination of an EVSE-ID and a vehicle ID).

The gateway 30 is communicably connected to the EVSE 20. Specifically, the gateway 30 serves to relay communication between the server 100 and the EVSE 20. Even when a communication protocol of the server 100 is different from a communication protocol of the EVSE 20, the server 100 and the EVSE 20 can communicate with each other via the gateway 30.

FIG. 1 shows one of each of the electrified vehicle 10 and the EVSE 20. More than one of each of the electrified vehicle 10 and the EVSE 20 may be provided.

The server 100 includes a processor 101, the memory 102, and a communication unit 103. The communication unit 103 is an example of an acquisition unit according to the disclosure.

The memory 102 stores not only a program to be run on the processor 101 but also information to be used by the program (for example, maps, mathematical expressions, and various parameters). The communication unit 103 includes various communication I/Fs. The processor 101 controls the communication unit 103.

The communication unit 103 is capable of communicating with each of the system management server 200, a data communication module (DCM) 10a of the electrified vehicle 10, and the gateway 30.

The processor 101 includes a determining unit 101a and a command unit 101b. The determining unit 101a and the command unit 101b represent software components of the functional features of the processor 101.

Here, a predetermined commitment (agreement) on power control is made between the server 100 and the electrified vehicle 10. Specifically, the commitment includes information on the EVSE 20 scheduled to be subjected to power control (including information on the location of the EVSE 20, and the like), a charge or power supply amount, and an agreement on a charge or power supply time or the like. The commitment further includes an agreement on a time period in which power control (charge or discharge) is performed. Hereinafter, the time period may be referred to as an committed time period. The committed time period is an example of a first time period according to the disclosure.

In the first embodiment, it is assumed that a commitment to perform power control in time period A (see FIG. 2) is made with the electrified vehicle 10. Time period A is a predetermined time period, such as 14:00 to 16:00. Time period B shown in FIG. 2 is a time period (for example, 12:00 to 14:00) before (just before) time period A. Time period C shown in FIG. 2 is a time period (for example, 10:00 to 12:00) before (just before) time period B. Time period A is an example of a first time period according to the disclosure. Each of time period B and time period C is an example of a second time period according to the disclosure.

The communication unit 103 of the server 100 acquires information on an committed time period (time period A) in which power control is performed by the electrified vehicle 10 that has acceded to a request to perform power control.

Here, the electrified vehicle 10 can be disabled to perform power control in a committed time period. In this case, in an existing VPP system, an electrified vehicle is disabled to perform power control although an aggregator is scheduled to perform power control, so a request to adjust demand and supply of electric power is not satisfied. Therefore, a system (server) capable of further reliably satisfying a request to adjust demand and supply of electric power is desired.

For this reason, in the first embodiment, the processor 101 (determining unit 101a) of the server 100 determines whether there is an abnormality in a communication status of the electrified vehicle 10 and whether power control is allowed to be performed by the electrified vehicle 10 in a time period (for example, time period B) before time period A. When the processor 101 (determining unit 101a) determines that there is no abnormality, the processor 101 (command unit 101b) executes command control such that power control is performed by the electrified vehicle 10 in time period A.

The command control includes control to send a command value in power control to the EVSE 20. Specifically, when the electrified vehicle 10 is scheduled to perform external charging, a command value of the amount of charge is sent to the EVSE 20. When the electrified vehicle 10 is scheduled to perform external power supply, a command value of the amount of power supply is sent to the EVSE 20. Power control is performed between the electrified vehicle 10 and the EVSE 20 based on the command value.

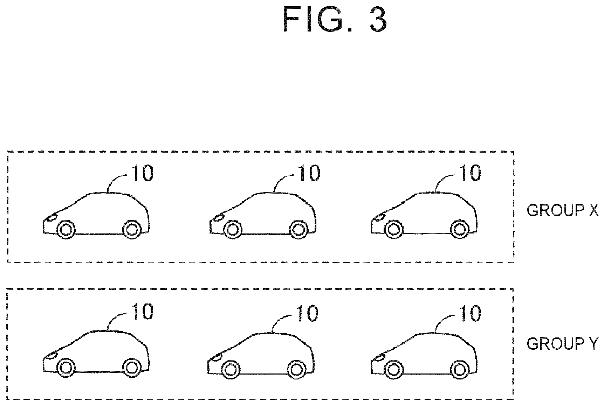

When the communication unit 103 acquires information on the fact that each of a plurality of the electrified vehicles 10 executes power control in a common time period (time period A), the processor 101 executes control to divide the electrified vehicles 10 into a plurality of groups (see group X and group Y in FIG. 3). The processor 101 (determining unit 101a) further determines whether there is the abnormality for each of the groups in a time period different from each other.

Specifically, the processor 101 (determining unit 101a) determines whether there is the abnormality for each of the electrified vehicles 10 of group X in time period B. The processor 101 (determining unit 101a) determines whether there is the abnormality for each of the electrified vehicles 10 of group Y in time period C. Each group may include only one electrified vehicle 10.

The processor 101 randomly divides the electrified vehicles 10 into a plurality of groups. At this time, the processor 101 makes groups such that the number of electrified vehicles 10 included in each of the groups is substantially equal.

Alternatively, the processor 101 may divide the electrified vehicles 10 into groups based on predetermined information. The predetermined information may include information on the EVSE 20 with which power control is scheduled to be performed. Specifically, a plurality of the electrified vehicles 10 scheduled to perform power control with the common EVSE 20 may be classified into the same group. The predetermined information is not limited to the above example. For example, the predetermined information may include information on the location of the electrified vehicle 10. In this case, a plurality of the electrified vehicles 10 of which the locations are close to each other may be classified into the same group.

### Management Method for Power Control

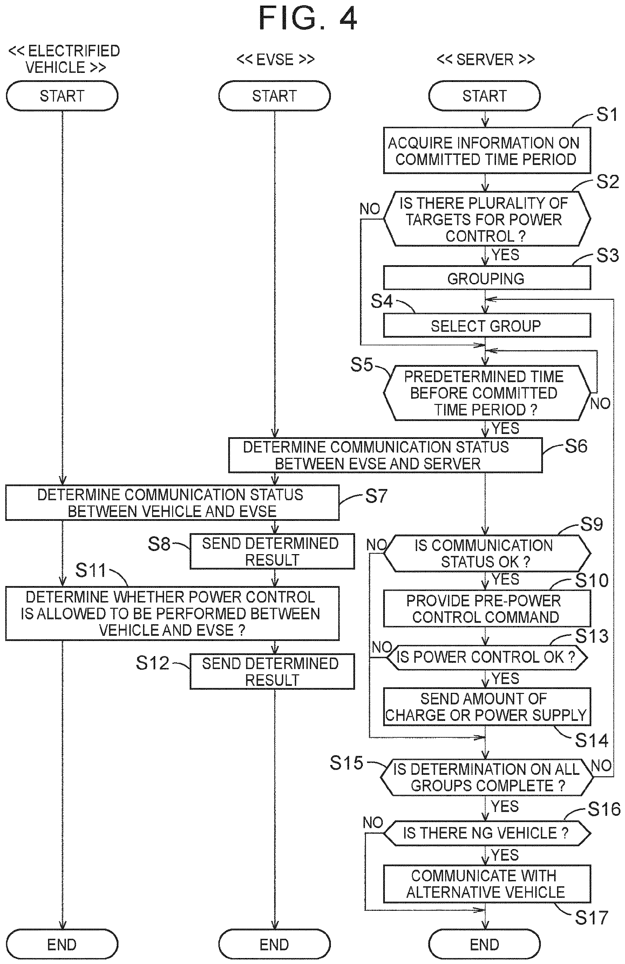

Next, a management method for power control will be described with reference to the sequence diagram of FIG. 4. Communication between the server 100 and the EVSE 20 is performed via the gateway 30.

### Acquiring Information on Committed Time Period: Server

Initially, in step S1, the server 100 (communication unit 103) acquires, through communication, information on time period A (committed time period) in which power control of each of the electrified vehicles 10 is performed.

### Determining Number of Electrified Vehicles: Server

Subsequently, in step S2, the server 100 determines whether the number of the electrified vehicles 10 with which power control in time period A is committed is plural. When the server 100 determines that the number of the electrified vehicles 10 is plural (Yes in S2), the process proceeds to step S3. When the server 100 determines that the number of the electrified vehicles 10 is not plural (only one) (No in S2), the process proceeds to step S5.

### Grouping: Server

Subsequently, in step S3, the server 100 executes a process of dividing the electrified vehicles 10 determined in step S2 into a plurality of groups. The details of grouping are as described above, so the description will not be repeated.

### Selecting Group: Server

Subsequently, in step S4, the server 100 selects a group to be subjected to determination as to whether there is the abnormality, from among the groups classified in step S3. In step S4, a group not yet subjected to determination as to whether there is the abnormality is selected. Initially, it is assumed that group Y (see FIG. 3) is selected.

### Determining Time: Server

Subsequently, in step S5, the server 100 determines whether the current time is in time period C (see FIG. 2) a predetermined time before the committed time period (time period A). When the server 100 determines that the current time is in time period C, the process proceeds to step S6. When the server 100 determines that the current time is not in time period C, the process of step S5 is repeated.

### Determining Communication Status: EVSE-Server

Next, in step S6, a communication status between the server 100 (gateway 30) and the EVSE 20 is determined.

### Determining Communication Status: Electrified Vehicle-EVSE

Subsequently, in step S7, a communication status between the electrified vehicle 10 and the EVSE 20 is determined. Subsequently, in step S8, the determined result of step S7 is sent from, for example, the EVSE 20 to the server 100 (communication unit 103) through the gateway 30. The determined result may be sent from the electrified vehicle 10 to the server 100 (communication unit 103).

### Determining Communication Status: Server

Subsequently, in step S9, the processor 101 (determining unit 101a) determines whether communication of each of step S6 and step S7 is normal. For the electrified vehicles 10 determined to be normal, the process proceeds to step S10. For the electrified vehicles 10 determined to be not normal, the process proceeds to step S15.

### Pre-Power Control Command: Server

Subsequently, in step S10, the server 100 (communication unit 103) sends a command to perform pre-power control (before time period A) to at least one of the electrified vehicle 10 and the EVSE 20. When the electrified vehicle 10 is scheduled to perform external power supply, only a command to perform external power supply is sent. When the electrified vehicle 10 is scheduled to perform external charging, only a command to perform external charging is sent.

### Determining Pre-Power Control: Electrified Vehicle-EVSE

Subsequently, in step S11, it is determined whether power control is allowed to be performed between the electrified vehicle 10 and the EVSE 20. For example, whether power control is allowed to be performed may be determined based on a change in state of charge (SOC) in the electrified vehicle 10. Subsequently, in step S12, the determined result of step S11 is sent from, for example, the EVSE 20 to the server 100 (communication unit 103) through the gateway 30. The determined result may be sent from the electrified vehicle 10 to the server 100 (communication unit 103).

### Determining Whether Power Control Is Allowed: Server

Subsequently, in step S13, the processor 101 (determining unit 101a) determines whether power control is allowed to be normally performed based on the determined result of step S12. For the electrified vehicle 10 for which it is determined that power control is allowed to be normally performed (Yes in S13), the process proceeds to step S14. For the electrified vehicle 10 for which it is determined that power control is not allowed to be normally performed (No in S13), the process proceeds to step S15.

### Sending Command Value of Amount of Charge or Power Supply: Server

Subsequently, in step S14, the processor 101 (command unit 101b) sends a command value of the amount of charge or power supply of electric power in power control to the EVSE 20 (gateway 30) through the communication unit 103. Power control based on the command value is performed between the electrified vehicle 10 and the EVSE 20.

### Determining Whether Determination for All Groups Is Complete: Server

Subsequently, in step S15, the processor 101 determines whether a determination process as to whether there is the abnormality for all the groups is complete. When the determination process for all the groups is complete (Yes in S15), the process proceeds to step S16. When the determination process for all the groups is not complete (No in S15), the process returns to step S4. When the process returns to step S4, group X is selected. In this case, in the next step S5, the server 100 determines whether the current time is in time period B (see FIG. 2).

### Determining Whether There Is NG Electrified Vehicle: Server

In step S16, the server 100 (processor 101) determines whether there is the electrified vehicle 10 determined to be abnormal in communication or power control, based on the results of step S8 and step S12. When there is the electrified vehicle 10 determined to be abnormal (Yes in S16), the process proceeds to step S17. When there is no electrified vehicle 10 determined to be abnormal (No in S16), the process ends.

### Communicating with Alternative Electrified Vehicle: Server

In step S17, the server 100 (communication unit 103) communicates with another electrified vehicle different from the electrified vehicles 10 and makes a request to perform power control in time period A in place of the abnormal electrified vehicle 10. Thus, resources for power control in time period A are ensured. At this time, the server 100 may make the request of other electrified vehicles in the same number as the number of the electrified vehicles 10 determined to be abnormal.

After that, although a step is not shown, the server 100 (communication unit 103) sends a command signal for power control to the electrified vehicle 10 determined to be not abnormal when the committed time period (time period A) has come.

As described above, in the first embodiment, when it is determined that there is no abnormality on the communication status of the electrified vehicle 10 and whether power control is allowed to be performed by the electrified vehicle 10 in a time period (B, C) before time period A, command control is executed such that power control is performed by the electrified vehicle 10 in time period A. Thus, since whether there is the abnormality is determined in advance of power control, it is possible to cause another electrified vehicle to perform power control in place of the electrified vehicle 10 determined to be abnormal. As a result, a request to adjust demand and supply of electric power is easily satisfied.

The server 100 sends information on the amount of charge or power supply to the EVSE 20. Thus, an increase in communication traffic of the DCM 10a of the electrified vehicle 10 is suppressed. As a result, an increase in cost (communication fee) for which a user of the electrified vehicle 10 pays is suppressed. Since electric power of an auxiliary battery (not shown) of the electrified vehicle 10 is consumed each time communication is performed by the DCM 10a, consumption of electric power of the auxiliary battery is reduced by suppressing an increase in the communication traffic of the DCM 10a.

### Second Embodiment

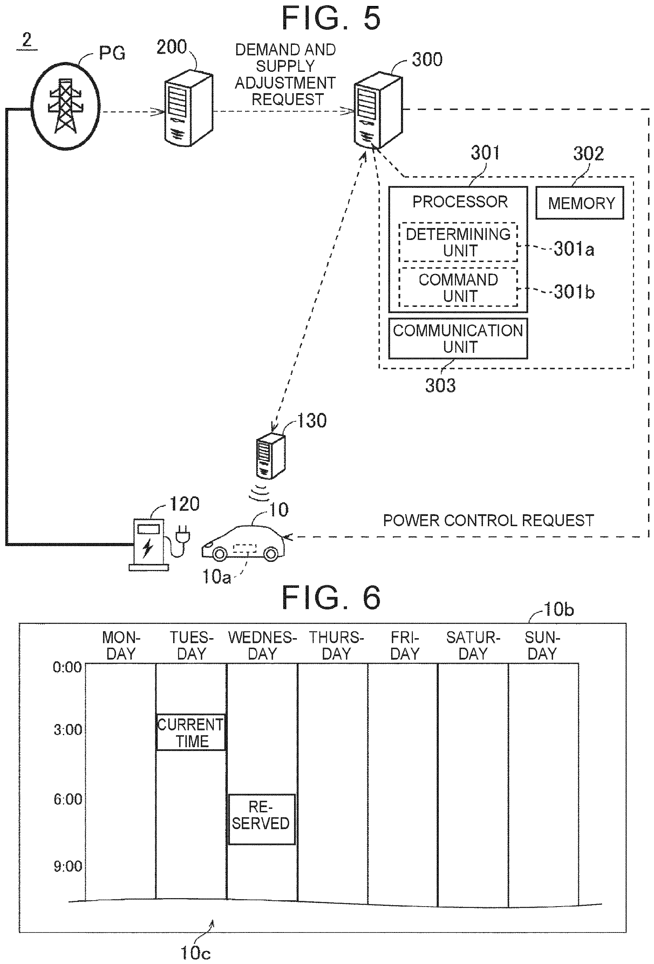

Next, a second embodiment of the disclosure will be described with reference to FIG 5 to FIG. 7. In the second embodiment, different from the first embodiment in which the amount of charge or power supply is sent to the EVSE 20, schedule information of external charging is sent to the electrified vehicle 10. Like reference signs denote the same components as those of the first embodiment, and the description thereof will not be repeated.

FIG. 5 is a diagram that shows the configuration of a system 2 according to the second embodiment. The system 2 includes the electric power system PG, a server 300, the system management server 200, the electrified vehicle 10, an EVSE 120, and a relay server 130.

The electrified vehicle 10 is capable of performing charge (external charging) from the electric power system PG through the EVSE 120. FIG. 5 shows one of each of the electrified vehicle 10 and the EVSE 120. More than one of each of the electrified vehicle 10 and the EVSE 120 may be provided.

The server 300 includes a processor 301, a memory 302, and a communication unit 303. The communication unit 303 is an example of an acquisition unit according to the disclosure.

The memory 302 stores not only a program to be run on the processor 301 but also information to be used by the program (for example, maps, mathematical expressions, and various parameters). The communication unit 303 includes various communication I/Fs. The processor 301 controls the communication unit 303.

The communication unit 303 is capable of communicating with each of the system management server 200, the electrified vehicle 10, and the relay server 130.

The processor 301 includes a determining unit 301a and a command unit 301b. The determining unit 301a and the command unit 301b represent software components of the functional features of the processor 301.

Here, in the second embodiment, when the processor 301 (command unit 301b) determines that there is no abnormality, the processor 301 (command unit 301b) executes command control such that external charging is performed by the electrified vehicle 10 in time period A (see FIG. 2).

The command control includes control to send schedule information including information on time period A for external charging to the electrified vehicle 10. Specifically, data including the schedule information is sent from the communication unit 303 of the server 300 to the DCM 10a of the electrified vehicle 10. A car navigation system 10b (see FIG. 6) of the electrified vehicle 10 to which the data is sent shows a schedule screen 10c (see FIG. 6) for external charging. FIG. 6 shows an example in which current time is around 3:00 a.m. Tuesday and a reservation for external charging is set to 6:00 a.m. to 8:00 a.m. Wednesday.

The electrified vehicle 10 is restricted from external charging (external charging is forcibly set to a disabled state) even when connected to the EVSE 120 until a reserved time period (committed time period) of external charging. In this case, the server 300 may send a signal for restricting external charging of the electrified vehicle 10 to the electrified vehicle 10. When the reservation for external charging is cancelled, the restriction is lifted.

### Management Method for Power Control

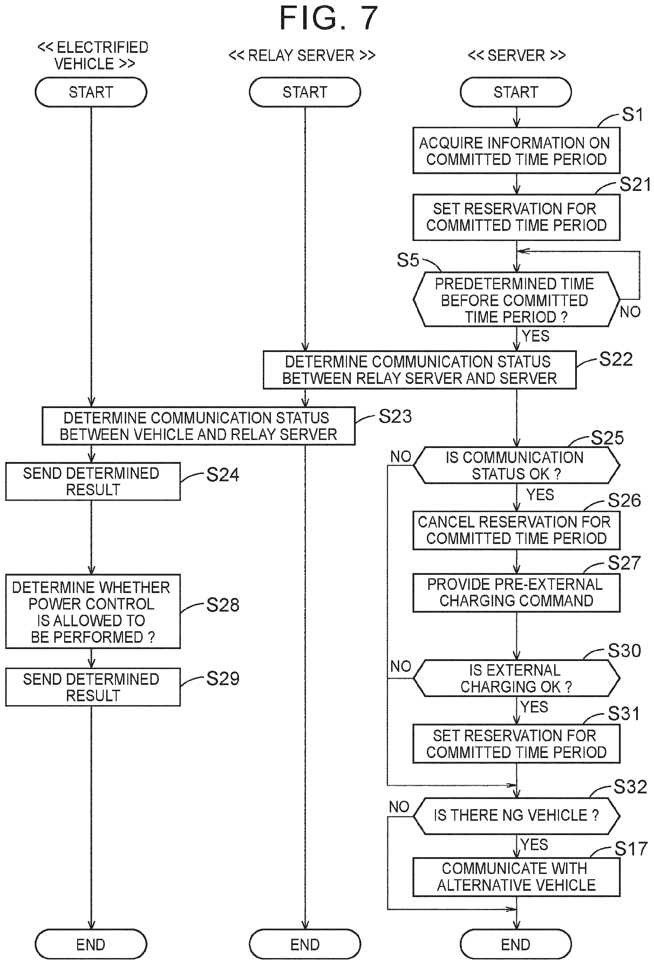

Next, a management method for power control will be described with reference to the sequence diagram of FIG. 7. Like step numbers denote steps similar to those of the first embodiment, and the description thereof will not be repeated. In the example shown in FIG. 7, for the same of simplification, steps related to grouping described in the first embodiment (see step S3, step S4, and step S15 in FIG. 4) are omitted. The grouping process may also be executed in the second embodiment.

### Determining Communication Status: Relay Server-Server

In step S22 subsequent to step S5, a communication status between the server 300 and the relay server 130 is determined.

### Determining Communication Status: Electrified Vehicle-Relay Server

Subsequently, in step S23, a communication status between the electrified vehicle 10 and the relay server 130 is determined. Subsequently, in step S24, the determined result of step S23 is sent from the electrified vehicle 10 (DCM 10a) to the server 300 (communication unit 303) through the relay server 130.

### Determining Communication Status: Server

Subsequently, in step S25, the processor 301 (determining unit 301a) determines whether communication of each of step S22 and step S23 is normal. When the processor 301 (determining unit 301a) determines that the communication is normal (Yes in S25), the process proceeds to step S26. When the processor 301 (determining unit 301a) determines that the communication is not normal (No in S25), the process proceeds to step S32.

### Cancelling Reservation: Server

Subsequently, in step S26, the server 300 (processor 301) executes control to cancel the reservation for external charging, set in step S21. Thus, the electrified vehicle 10 is allowed to perform external charging.

### Pre-Power Control Command: Server

Subsequently, in step S27, the server 300 (communication unit 303) sends a command to perform pre-external charging (before time period A) to the electrified vehicle 10 (DCM 10a).

### Determining Pre-Power Control: Electrified Vehicle

Subsequently, in step S28, the electrified vehicle 10 determines whether external charging is allowed to be performed. Subsequently, in step S29, the result determined in step S28 is sent from the electrified vehicle 10 (DCM 10a) to the server 300 (communication unit 303).

### Determining Whether External Charging Is Allowed: Server

Subsequently, in step S30, the processor 301 (determining unit 301a) determines whether external charging is allowed to be normally performed based on the determined result of step S29. When the processor 301 (determining unit 301a) determines that external charging is allowed to be normally performed (Yes in S30), the process proceeds to step S31. When the processor 301 (determining unit 301a) determines that external charging is not allowed to be normally performed (No in S30), the process proceeds to step S32.

### Setting Reservation for Committed Time Period: Server

Subsequently, in step S31, the processor 301 (command unit 301b) sends information on the reservation for external charging in the committed time period (time period A) through the communication unit 303 to the electrified vehicle 10. Thus, in the electrified vehicle 10, a reservation for external charging in the committed time period is set. Determining Whether There Is NG Electrified Vehicle: Server

In step S32, the server 300 (processor 301) determines whether there is the electrified vehicle 10 determined to be abnormal in communication or power control, based on the results of step S24 and step S29. When there is the electrified vehicle 10 determined to be abnormal (Yes in S32), the process proceeds to step S17. When there is no electrified vehicle 10 determined to be abnormal (No in S32), the process ends.

As described above, in the second embodiment, when it is determined that there is no abnormality in a time period before time period A, schedule information for external charging is sent to the electrified vehicle 10. Thus, a user of the electrified vehicle 10 allowed to normally perform external charging is able to check the schedule information. As a result, it is possible to further reliably perform external charging in time period A.

In the first and second embodiments, the example in which both the communication status of the electrified vehicle 10 and whether power control is allowed to be performed by the electrified vehicle 10 are determined has been described; however, the disclosure is not limited thereto. Only any one of the communication status of the electrified vehicle 10 and whether power control is allowed to be performed by the electrified vehicle 10 may be determined.

In the first embodiment, the example in which the electrified vehicle 10 is allowed to perform both external charging and external power supply has been described; however, the disclosure is not limited thereto. The electrified vehicle 10 may be allowed to perform only one of external charging and external power supply. In the second embodiment, the electrified vehicle 10 may be allowed to perform both external charging and external power supply.

In the second embodiment, the example in which external charging is not allowed to be performed until a committed time period while a reservation for external charging is set has been described; however, the disclosure is not limited thereto. External charging may be allowed to be performed even while a reservation for external charging is set.

The embodiments described above are illustrative and not restrictive in all respects. The scope of the disclosure is not defined by the description of the above-described embodiments, and is defined by the appended claims. The scope of the disclosure is intended to encompass all modifications within the scope of the appended claims and equivalents thereof.

## Claims

1. A server (100; 300) configured to manage power control including at least one of power supply from at least one electrified vehicle (10) to an electric power system (PG) and charge from the electric power system (PG) to the electrified vehicle (10), the server (100; 300) comprising:
an acquisition unit (103; 303) configured to acquire information on a first time period in which the power control is performed by the electrified vehicle (10) that has acceded to a request to perform the power control; and
a processor (101; 301) configured to determine, in a second time period before the first time period, whether there is an abnormality on at least one of a communication status of the electrified vehicle (10) and whether the power control is allowed to be performed by the electrified vehicle (10), wherein
the processor (101; 301) is configured to, when the processor (101; 301) determines that there is no abnormality, execute command control such that the power control is performed by the electrified vehicle (10) in the first time period.

2. The server (100; 300) according to claim 1, wherein the processor (101; 301) is configured to determine whether there is the abnormality on both the communication status of the electrified vehicle (10) and whether the power control is allowed to be performed by the electrified vehicle (10).

3. The server (100; 300) according to claim 1 or 2, wherein:
a plurality of the electrified vehicles (10) is provided; and
the processor (101; 301) is configured to, when the acquisition unit (103; 303) acquires information on a fact that each of the plurality of electrified vehicles (10) performs the power control in the first time period common to the plurality of electrified vehicles (10),
execute control to divide the plurality of electrified vehicles (10) into a plurality of groups, and
determine whether there is the abnormality in each of the plurality of groups in a corresponding one of the second time periods different from each other.

4. The server (100; 300) according to claim 1 or 2, wherein:
the electrified vehicle (10) is configured to perform the power control through a power station (20); and
the command control includes control to send a command value of at least one of an amount of charge and an amount of power supply in the power control to the power station (20).

5. The server (100; 300) according to claim 1 or 2, wherein the command control includes control to send schedule information including information on the first time period of the power control to the electrified vehicle (10).

6. A management method of managing power control including at least one of power supply from an electrified vehicle (10) to an electric power system (PG) and charge from the electric power system (PG) to the electrified vehicle (10), the management method comprising:
acquiring information on a first time period in which the power control is performed by the electrified vehicle (10) that has acceded to a request to perform the power control;
determining, in a second time period before the first time period, whether there is an abnormality on at least one of a communication status of the electrified vehicle (10) and whether the power control is allowed to be performed by the electrified vehicle (10); and
when it is determined that there is no abnormality, executing command control such that the power control is performed by the electrified vehicle (10) in the first time period.
